# FASCICULE DE BREVET EUROPEEN

(11) **EP 3 404 278 B1**
(45) Date de publication et mention de la délivrance du brevet: **28.08.2019**
(21) Numéro de dépôt: 18169656.8
(22) Date de dépôt: 26.04.2018
(51) Int. Cl.: F16D 13/64, F16D 3/04

(54) **DISPOSITIF D'ACCOMMODATION DES DESALIGNEMENTS ENTRE LE VILEBREQUIN ET L'ARBRE D'ENTREE DE LA BOITE DE VITESSE ET DISQUE DE FRICTION EQUIPE D'UN TEL DISPOSITIF**
VORRICHTUNG ZUR KORREKTUR VON FEHLAUSRICHTUNGEN ZWISCHEN DER KURBELWELLE UND DER EINGANGSWELLE DES GETRIEBES, UND REIBUNGSSCHEIBE, DIE MIT EINER SOLCHEN VORRICHTUNG AUSGESTATTET IST
DEVICE FOR ACCOMMODATING MISALIGNMENTS BETWEEN THE CRANKSHAFT AND THE INPUT SHAFT OF THE GEARBOX AND FRICTION DISC PROVIDED WITH SUCH A DEVICE

(30) Priorité: 16.05.2017 FR 1754282
(43) Date de publication de la demande: 21.11.2018
(73) Titulaire: Valeo Embrayages, 80009 Amiens cedex 2 (FR)
(72) Inventeur: COUTURIER, Benoit, 80009 AMIENS (FR)
(74) Mandataire: Vincent, Catherine Marie Marguerite

(56) Documents cités:
- DE-B1- 2 338 394
- FR-A1- 2 736 111
- FR-A1- 2 849 127
- US-A- 4 068 749
- US-A- 5 007 517

## Description

L'invention se rapporte à un dispositif d'accommodation des désalignements entre les axes respectifs du vilebrequin et de l'arbre d'entrée de la boîte de vitesse ainsi qu'à un disque de friction d'embrayage équipé dudit dispositif.

Plus précisément, l'invention concerne un perfectionnement du disque de friction des systèmes de transmission, notamment à traction, destinés aux embrayages de véhicules automobiles.

### ÉTAT DE LA TECHNIQUE ANTÉRIEURE

Dans les systèmes de transmission par traction traditionnels, le disque de friction de l'embrayage comprend, notamment, des garnitures de friction, un moyeu porté par un voile annulaire et accouplé en rotation à l'arbre d'entrée de la boîte de vitesse et des organes de liaison agencés entre le disque de support des garnitures et le voile de support du moyeu.

Du fait que l'arbre primaire de la boîte de vitesses est généralement monté en porte-à-faux par rapport à l'axe du vilebrequin, il apparaît un déport axial et des mouvements dits de nutation qui sont induits par la rotation irrégulière du vilebrequin.

Il est donc prévu que les organes de liaison laissent aux garnitures de friction une liberté de déplacement radial par rapport à l'axe de rotation du moyeu, comme décrit dans le FR2781266A1 et dans FR2849127A1.

Dans ce cas, le voile est couplé à des moyens de contrôle de ce déplacement ou de compensation des désalignements. Ces moyens comprennent des ressorts et une denture intérieure qui vient en prise avec une denture extérieure du moyeu. Toutefois, les ressorts sont des pièces dont le prix de revient est élevé.

En outre, dans ce mode de réalisation, le diamètre extérieur du voile est important ce qui, dans des environnements mécaniques très contraints, pose des problèmes d'encombrement et d'interférence avec les autres composants.

Par ailleurs, dans le cas de systèmes de transmission équipés d'un double-volant amortisseur destiné à assurer l'absorption des vibrations et des irrégularités du couple moteur, les organes de liaison précédents sont supprimés et l'espace disponible est réduit.

Dans ce cas et pour pallier aux désalignements excessifs entre l'axe du vilebrequin et l'axe de l'arbre primaire de la boîte de vitesse, le disque de friction supportant les garnitures est alors monté autour du moyeu en étant solidarisé à un voile annulaire intercalaire solidaire du disque de friction et présentant une liberté de basculement. Un tel voile, dit à « friction rotulante », est décrit, notamment, dans le FR2808850A1.

Cependant, si un tel mode de réalisation permet de limiter les décalages angulaires, il n'est pas apte à assurer le contrôle et la correction des décalages radiaux.

Or ces décalages sont préjudiciables car ils induisent des phénomènes de bruyance et/ou de vibrations ainsi que des risques de défaillance mécanique suite à une usure ou une rupture.

### EXPOSÉ DE L'INVENTION

Le dispositif d'accommodation selon l'invention a pour objectif de résoudre les problèmes techniques posés par l'art antérieur en rattrapant à la fois les décalages angulaires et les décalages radiaux entre les axes respectifs du vilebrequin et de l'arbre de la boîte de vitesse, en particulier, dans un système de transmission à traction équipé d'un double-volant amortisseur et dans lequel l'arbre de boîte de vitesse est dépourvu de paliers ou de roulement de support et de guidage.

Conjointement, le disque de friction de l'invention vise à assurer le maintien et l'alignement du moyeu tout en autorisant son déplacement dans le plan des garnitures de friction.

Ce but est atteint, selon l'invention, au moyen d'un dispositif d'accommodation du désalignement radial ou angulaire entre les axes respectifs d'un vilebrequin et d'un arbre d'entrée de boîte de vitesse dans un système de transmission de véhicule automobile comprenant, un voile annulaire destiné à être accouplé en rotation avec le vilebrequin, un moyeu destiné à être, d'une part, accouplé en rotation à l'arbre d'entrée de la boîte de vitesse et, d'autre part, engagé avec une liberté de débattement angulaire et/ou radial dans ledit voile annulaire, caractérisé en ce qu'il comprend, au moins une rondelle intérieure retenue sur la périphérie du moyeu et au moins une rondelle extérieure montée de façon coaxiale dans un couvercle fixé sur ledit voile en emprisonnant lesdites rondelles de façon jointive de telle sorte que le débattement du moyeu résultant du désalignement entraîne le déplacement radial relatif desdites rondelles et soit maîtrisé par leur couple de frottement mutuel.

Selon une première variante, la rondelle intérieure présente au moins deux encoches intérieures radiales destinées à coiffer des nervures de profil complémentaire s'étendant axialement sur la périphérie du moyeu.

Selon une autre caractéristique, le moyeu comporte une couronne dentée destinée à se loger dans une denture crénelée ménagée sur le pourtour intérieur d'un orifice ménagé au centre dudit voile annulaire.

De préférence, les nervures s'étendent entre le bord d'extrémité du moyeu et la couronne dentée assurant l'appui axial sous contraintes de la rondelle intérieure contre la couronne dentée.

Selon une caractéristique avantageuse, le diamètre extérieur de la rondelle intérieure est inférieur au diamètre extérieur de la rondelle extérieure. Cette différence de diamètre présente l'avantage de conserver la même quantité de surface de frottement entre les rondelles quelque soit le niveau de désalignement radial ou angulaire entre les axes du vilebrequin et de l'arbre d'entrée de boîte de vitesse.

Selon une autre variante, la rondelle extérieure présente au moins deux ergots extérieurs radiaux destinés à pénétrer dans des fentes de profil complémentaire s'étendant axialement sur le pourtour du couvercle.

De préférence, les fentes du couvercle sont débouchantes sur le pourtour du couvercle.

En variante, les fentes du couvercle sont non-débouchantes et sont réalisées par emboutissage du pourtour du couvercle.

Avantageusement, les ergots extérieurs aménagés sur la rondelle extérieure viennent en appui latéral sur les fentes du couvercle.

Selon encore une autre caractéristique, le couvercle comporte une collerette périphérique dans laquelle sont ménagés des orifices pour la réception d'organes de liaison avec le voile annulaire.

De manière avantageuse, le dispositif comprend, en outre, au moins un accumulateur d'énergie disposé entre le couvercle et les rondelles intérieures et extérieures.

De préférence, cet accumulateur d'énergie est comprimé axialement. L'accumulateur d'énergie exerce une charge répartie circonférentiellement sur les rondelles intérieures et extérieures. Cette charge est exercée quelque soit le niveau le niveau de désalignement radial ou angulaire entre les axes du vilebrequin et de l'arbre d'entrée de boîte de vitesse.

En variante, l'accumulateur d'énergie est disposé entre le moyeu et les rondelles intérieures et extérieures.

L'accumulateur d'énergie peut être constitué d'une rondelle élastique, ou d'au moins un ressort hélicoïdal ou bien encore d'une pièce élastomère.

La rondelle élastique peut comprendre des doigts d'appui qui participent à l'arrêt en rotation de ladite rondelle élastique par l'intermédiaire des fentes du couvercle.

Selon un mode de réalisation préférentiel de l'invention, le dispositif comprend une première série de rondelles intérieures et une seconde série de rondelles extérieures intercalées entre lesdites rondelles intérieures en formant un empilement de rondelles en contact de frottement.

Un autre objet de l'invention est un disque de friction pour embrayage de véhicule automobile à transmission par traction, équipé d'un dispositif d'accommodation des désalignements présentant les caractéristiques définies ci-dessus et de garnitures de friction portées par la périphérie du voile annulaire.

Une des caractéristiques de ce disque de friction consiste en ce qu'en transmettant le couple en provenance du vilebrequin vers l'arbre d'entrée de la boîte de vitesse, une partie de ce couple passe par le contact de frottement entre les rondelles intérieures et extérieures tandis qu'une autre partie passe par l'engagement de la couronne dentée du moyeu avec la denture complémentaire de l'orifice central du voile annulaire.

Encore un autre objet de l'invention est un système de transmission pour véhicule automobile comprenant, respectivement, un double-volant amortisseur et un disque de friction tel que défini ci-dessus dans lequel le couple de frottement entre les rondelles intérieures et extérieures est supérieur au couple de frottement interne du double-volant amortisseur.

Le dispositif d'accommodation des désalignements selon l'invention s'applique essentiellement à des disques de friction pour embrayages et trouve un intérêt particulier dans une architecture de transmission à traction. L'invention trouve une application préférentielle et particulièrement avantageuse lorsque le disque de friction est associé à un double-volant amortisseur.

L'empilement sous contraintes des rondelles entre le moyeu et le couvercle permet de générer un frottement important dans un empilement de rondelles de faible encombrement tout en autorisant une réduction des efforts axiaux de serrage des rondelles intérieures et extérieures ce qui permet de réduire les risques de déformation des composants du dispositif.

En multipliant le nombre de rondelles, on augmente ainsi le couple de frottement à charge égale exercée par l'accumulateur d'énergie.

Le couple de frottement entre les rondelles étant supérieur au couple de frottement interne au double-volant amortisseur, ce dernier peut assurer efficacement le filtrage y compris dans les phases de fonctionnement de la transmission au point-mort.

Grâce au dispositif de l'invention, un désalignement radial d'environ 2 mm de 0 à crête est accepté du fait du décalage radial possible des rondelles ainsi qu'un désalignement angulaire de plus ou moins 2° du fait de l'écrasement possible de l'accumulateur d'énergie.

### BREVE DESCRIPTION DES FIGURES

D'autres caractéristiques et avantages de l'invention ressortiront à la lecture de la description qui va suivre, en référence aux figures annexées et détaillées ci-après.
Les figures 1A et 1B sont des vues, respectivement, en perspective éclatée et de face d'un mode de réalisation du dispositif d'accommodation de l'invention.
Les figures 2A, 2B et 2C sont des vues partielles en coupe axiale du dispositif de l'invention, respectivement, en position de centrage, en position de décalage angulaire et en position de décalage radial entre l'axe du vilebrequin et l'axe de l'arbre d'entrée de la boîte de vitesse.
Les figures 3A et 3B sont des vues en coupe transversale au niveau du moyeu du dispositif représenté sur la figure 1B, respectivement, en position de centrage et en position de décalage radial des axes du vilebrequin et de l'arbre de boîte de vitesse.
Les figures 4A et 4B sont des vues en coupe transversale dans le plan du disque de friction du dispositif représenté sur la figure 1B, respectivement, en position de centrage et en position de décalage radial des axes du vilebrequin et de l'arbre de boîte de vitesse.
La figure 5 est une vue schématique d'un système de transmission selon l'invention comprenant un disque de friction équipé d'un dispositif d'accommodation des désalignements tel que représenté sur les figures 1A, 1B et suivantes et d'un double-volant amortisseur.

Pour plus de clarté, les éléments identiques ou similaires sont repérés par des signes de référence identiques sur l'ensemble des figures.

### DESCRIPTION DÉTAILLÉE DE MODES DE REALISATION

Naturellement, les modes de réalisation illustrés par les figures présentées ci-dessus ne sont donnés qu'à titre d'exemples non limitatif. Il est explicitement prévu que l'on puisse combiner entre eux ces différents modes et variantes pour en proposer d'autres.

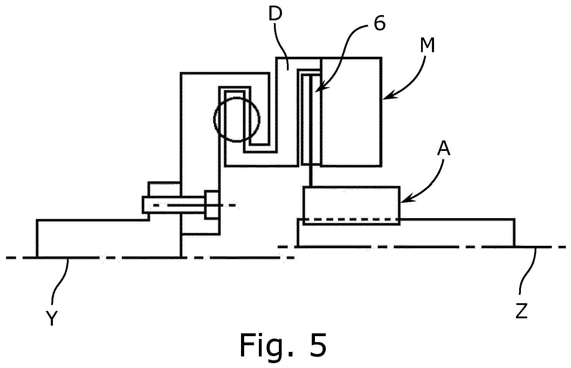

La figure 5 représente un système de transmission selon l'invention équipé d'un dispositif d'accommodation A des désalignements, d'un disque de friction 6 et d'un double-volant amortisseur D.

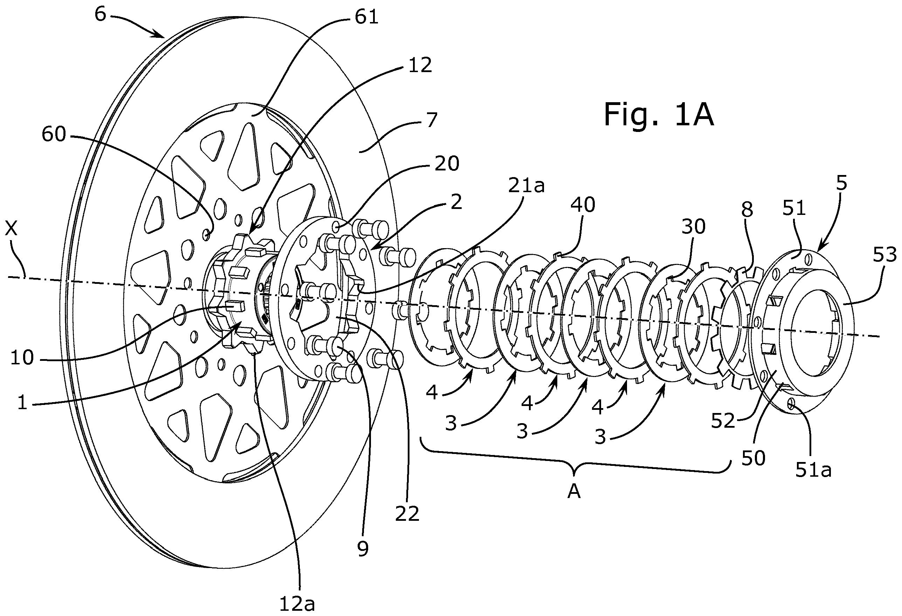

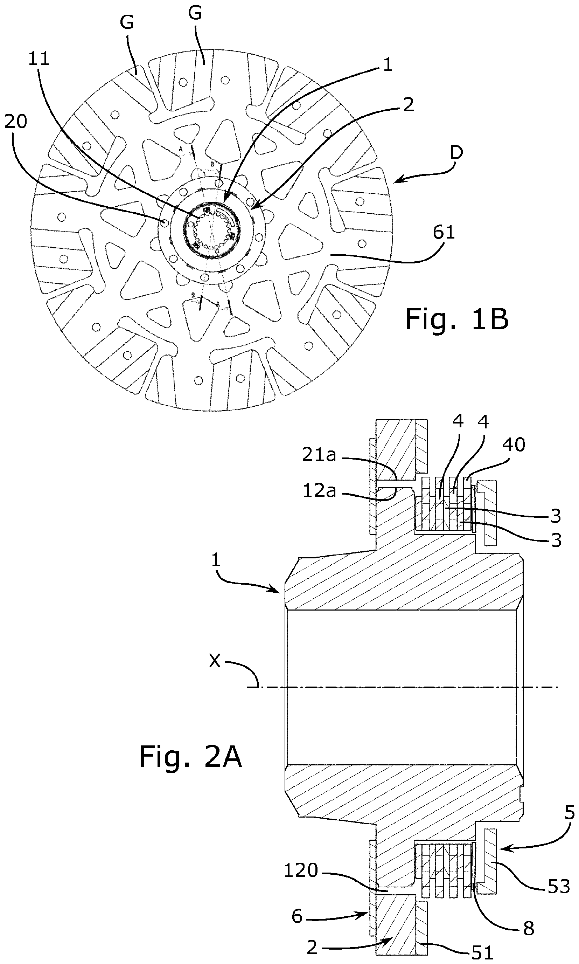

Les figures 1A et 1B représentent une vue partielle d'un disque de friction 6 pourvu d'un flasque 61 d'axe X portant des garnitures périphériques de friction 7 et un voile annulaire 2 accouplé à un moyeu central 1. Le moyeu 1 est accouplé en rotation à l'arbre d'entrée d'axe Z (figure 5) d'une boîte de vitesse (non représentée) au moyen de cannelures intérieures 11. Le moyeu 1 est une pièce de révolution d'axe X' qui est confondu avec l'axe Z de l'arbre d'entrée de la boite de vitesse.

Des organes de liaison tels que des rivets de fixation 9 sont agencés entre le flasque 61 du disque de friction 6 et le voile annulaire 2 en passant par des orifices 60, 20 en vis-à-vis.

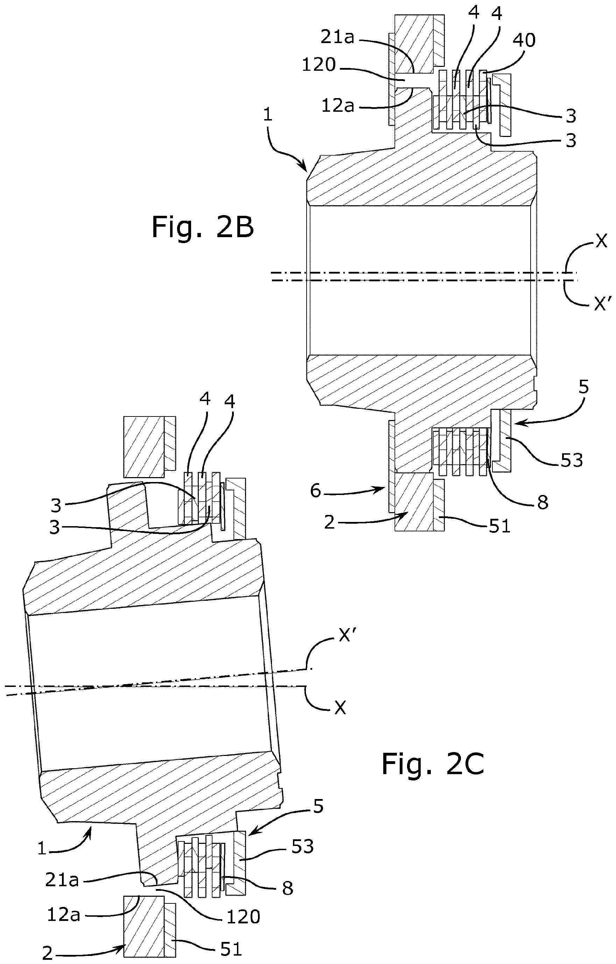

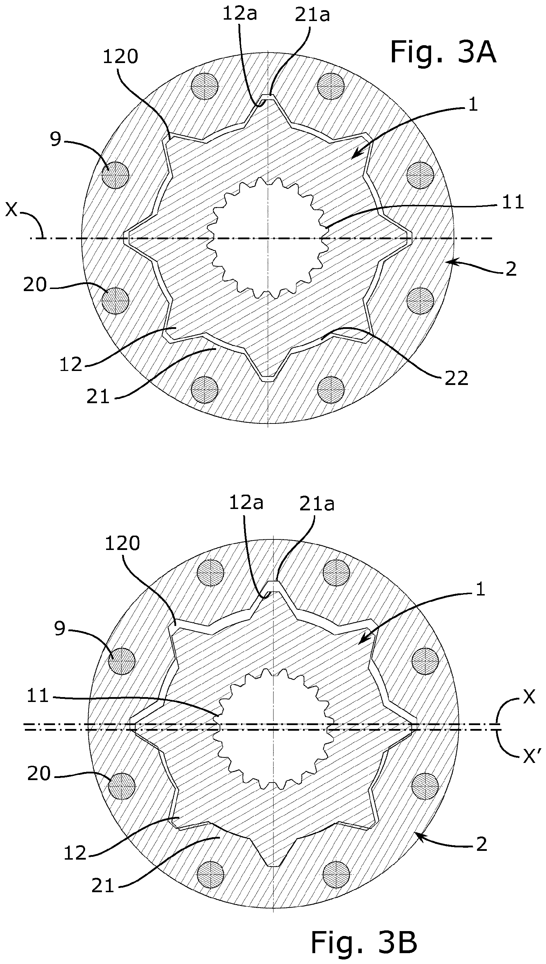

Comme illustré par les figures 1A et 2A, le moyeu 1 comporte une couronne dentée 12 de plus grand diamètre, destinée à se loger dans un orifice central 22 ménagé dans le voile annulaire 2. A cet effet, les dents 12a de la couronne 12 sont engagées dans des créneaux 21a ménagés sur le pourtour intérieur de l'orifice central 22 du voile 2 en formant une denture complémentaire 21 de la couronne dentée 12. Un jeu intercalaire 120 ménagé entre la couronne dentée 12 du moyeu 1 et la denture 21 du voile 2 autorise une liberté de débattement du moyeu 1 pour compenser le désalignement radial des axes X X', comme illustré par les figures 2B, 3B et 4B.

Le couple en provenance du moteur via le vilebrequin d'axe Y (figure 5) est ainsi transmis par mise en contact de la couronne dentée 12 avec la denture complémentaire 21 du voile annulaire 2.

Le dispositif d'accommodation A des désalignements est perfectionné en vue de maîtriser à la fois les désalignements radiaux et les désalignements angulaires entre les axes Y et Z. A cet effet, le dispositif A comprend, au moins une rondelle intérieure 3 retenue sur la périphérie du moyeu 1 et au moins une rondelle extérieure 4 montée de façon coaxiale dans un couvercle 5. Le couvercle 5 est assemblé de manière concentrique au flasque 61 et au voile annulaire 2. Le couvercle 5 partage le même axe de révolution X.

Dans la position de désalignement radial des axes X X' du moyeu 1 et du voile annulaire 2 (figure 2B), les dents 12a de la couronne 12 du moyeu 1 viennent, du côté décalé, en butée contre les créneaux 21 tandis que la face latérale du moyeu vient en appui contre le bord intérieur des rondelles extérieures 4 en provoquant le déplacement des rondelles intérieures 3 avec friction relativement aux rondelles extérieures 4.

Dans la position de désalignement angulaire des axes X X' du moyeu 1 et du voile annulaire 2 (figure 2c), les dents 12a de la couronne 12 du moyeu 1 viennent en butée contre les créneaux 21 accompagné par une inclinaison du moyeu 1 par rapport aux rondelles intérieures 3 et extérieures 4. L'inclinaison du moyeu peut atteindre jusqu'à 2° grâce à un jeu de denture présent entre le moyeu 1 et la denture intérieure 30 des rondelles intérieures 3.

Le couvercle 5 comporte une bride annulaire 51 pourvue d'orifices 51a destinés à recevoir les organes de liaison 9 assurant à la fois la fixation du couvercle sur le voile 2 et la fixation du voile 2 sur le flasque 61 du disque de friction 6. Les garnitures de friction 7 sont fixées sur la périphérie du flasque 61 par rivetage ou collage.

L'assemblage du voile 2 et du couvercle 5 sur le flasque 61 au moyen des organes de liaison 9 est réalisé de façon à bloquer les rondelles extérieures 4 en rotation tout en les emprisonnant de façon jointive pour les maintenir en contact de friction avec les rondelles intérieures 3 portées par le moyeu 1.

Dans le mode de réalisation de l'invention illustré par les figures, le dispositif comprend une première série de rondelles intérieures 3, réalisées, par exemple en acier ou en matière plastique, ici au nombre de quatre et une seconde série de rondelles extérieures 4, de préférence en métal ou en matière plastique et, ici, au nombre de quatre également.

Dans l'empilement alterné de rondelles illustré par la figure 1A, les rondelles intérieures 3 et les rondelles extérieures 4 sont alternativement montées les unes entre les autres selon l'axe X.

Il est prévu de disposer au moins un accumulateur d'énergie 8 entre le couvercle 5 et la rondelle extérieure 4 située à l'extrémité de l'empilement. Cet accumulateur d'énergie est constitué d'une rondelle élastique comprimée axialement. En variante, l'accumulateur d'énergie peut se présenter sous la forme d'au moins un ressort hélicoïdal ou bien encore d'une pièce élastomère.

En variante non représentée, l'accumulateur d'énergie 8 peut être placé entre le moyeu 1 et les rondelles intérieures 3 et extérieures 4.

Les rondelles intérieures 3 sont toutes identiques et présentent au moins deux, et ici dans le mode de réalisation des figures, huit encoches radiales 30. Ces encoches qui sont ici à bords droits, sont ménagées sur le pourtour intérieur des rondelles 3 et sont destinées à coiffer des nervures 10 de profil complémentaire s'étendant axialement sur la périphérie du moyeu 1. La coopération entre les encoches 30 et les nervures 10 assure le blocage en rotation des rondelles 3 relativement au moyeu 1.

Les nervures 10 s'étendent sur la paroi cylindrique du moyeu 1 située entre son bord d'extrémité et la couronne dentée 12. La longueur des nervures 10 est adaptée à la dimension de l'empilement des rondelles et donc, plus précisément, à leur nombre et à leurs épaisseurs respectives.

La hauteur des nervures 10 est toutefois moins importante que la profondeur des encoches 30 de façon à laisser, en position de centrage du moyeu, un jeu radial entre le bord intérieur des rondelles 3 et la face supérieure de ces nervures, comme illustré par la figure 2A.

De même, les rondelles extérieures 4 sont toutes identiques et présentent au moins deux, et ici dans le mode de réalisation des figures, huit ergots extérieurs radiaux 40 à bords droits. Les ergots 40 sont destinés à pénétrer dans des fentes 50 de profil complémentaire ménagées axialement sur le pourtour de la paroi latérale cylindrique 52 du couvercle 5. L'engagement des ergots 40 dans les fentes 50 assure le calage et le blocage en rotation des rondelles 4 relativement au couvercle 5.

Le bord intérieur des rondelles 4 se situe, en position de centrage, à distance de la face supérieure des nervures 10 du moyeu 1, comme illustré par la figure 2A.

La paroi latérale cylindrique du couvercle 5 se prolonge à l'extrémité du couvercle 5 par un épaulement transversal 53 formant un rétreint du diamètre du couvercle et délimitant une ouverture centrale dans laquelle est introduit le tronçon d'extrémité du moyeu 1, comme illustré par les figures 2A et 2B.

Les fentes 50 sont débouchantes radialement et leur longueur est adaptée au nombre et à l'épaisseur des rondelles 3, 4, de façon à assurer, en vis-à-vis de la couronne dentée 12, leur calage dans les fentes.

Dans ces conditions, la longueur des fentes 50 est sensiblement égale à celle des nervures 10 du moyeu 1 en vis-à-vis, de façon à assurer la mise en appui axial sous contraintes de l'empilement des rondelles 3, 4, d'une part, contre la couronne dentée 12 en saillie et, d'autre part, dans le couvercle 5 tout en autorisant un déplacement radial relatif avec friction des rondelles entre elles. Le couple passant par les rondelles extérieures 4 est transmis par l'appui latéral des ergots 40 sur les fentes 50 du couvercle 5.

Par ailleurs, les rondelles 3, 4 sont disposées les unes par rapport aux autres de sorte que les ergots 40 des rondelles 4 soient alignés avec les encoches 30 des rondelles 30. De préférence, les dimensions des ergots 40 sont adaptées au couple de frottement mutuel à transmettre.

Le couvercle 5 délimite ainsi, avec la couronne dentée 12 en vis-à-vis du moyeu 1, un compartiment cylindrique coaxial dans lequel est logé, sous contraintes axiales, l'empilement des rondelles intérieures et extérieures 3, 4.

L'accumulateur d'énergie 8 est sous charge lorsque le dispositif est assemblé et est comprimé de façon plus importante et de biais en présence d'un désalignement angulaire.

Comme illustré par les figures 1A et 2A, les diamètres intérieurs des rondelles intérieures 3 et des rondelles extérieures 4 bien qu'identiques, sont supérieurs au diamètre extérieur du tronçon du moyeu 1 portant les nervures 10 ce qui laisse subsister un léger jeu radial permettant le déplacement relatif des rondelles en phase de désalignement angulaire X X', comme illustré par la figure 2C.

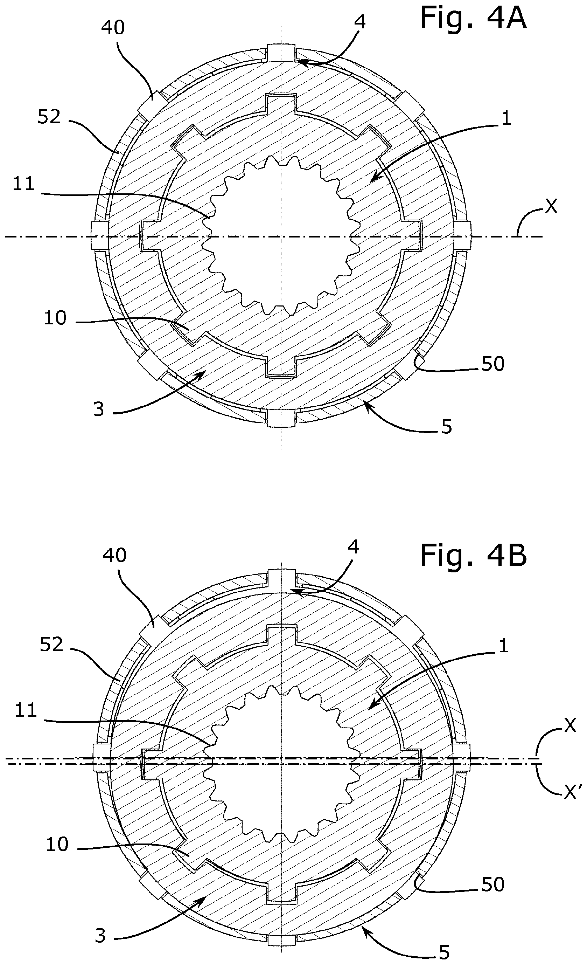

Le diamètre extérieur des rondelles intérieures 3 est inférieur au diamètre extérieur des rondelles extérieures 4. Cette configuration autorise le déplacement relatif des rondelles intérieures 3 par rapport aux rondelles extérieures 4. Le déplacement radial est toutefois limité par la mise en contact du bord extérieur des rondelles intérieures 3 avec le couvercle 5 (voir figure 4B).

Le débattement du moyeu 1 par rapport au voile annulaire 2 résultant du désalignement radial ou angulaire des axes est ainsi limité par la mise en butée contre les rondelles extérieures 4 et maîtrisé par le couple de frottement entre les rondelles intérieures et extérieures 3, 4 lors de leur déplacement radial relatif.

Le déplacement angulaire des axes X X' maximum accepté par le dispositif de l'invention est d'environ 2° et le désalignement radial des axes X X' maximum est d'environ 2 mm (de 0 à crête).

Comme mentionné précédemment, la figure 5 représente le système de transmission selon l'invention équipé d'un dispositif d'accommodation des désalignements, du disque de friction 6 et du double-volant amortisseur D. Dans ce système de transmission, le couple de frottement entre les rondelles 3, 4 est supérieur au couple de frottement interne du double-volant amortisseur DVA de telle sorte que ce dernier puisse ainsi continuer d'assurer efficacement le filtrage des vibrations du moteur, y compris dans les phases de point-mort.

Une valeur d'hystérésis du dispositif d'environ 10Nm et supérieur au couple de frottement du double-volant amortisseur est toutefois nécessaire. Le couple moteur se transfère d'abord du disque de friction 6 au voile annulaire 2 et au couvercle 5. Ce couple passe ensuite dans les rondelles extérieures 4 du fait de leur blocage en rotation dans le couvercle 5, puis dans les rondelles intérieures 3 en contact de friction avec les rondelles 4 avant d'atteindre les dents 12a de la couronne 12 du moyeu 1 puis l'arbre d'entrée d'axe Z de la boîte de vitesse.

Les désalignements angulaires ou radiaux des axes respectifs Y, Z de l'arbre moteur et de l'arbre d'entrée de la boîte de vitesse sont ainsi contrôlés par l'action des deux séries de rondelles 3, 4.

En effet, en présentant une liberté de déplacement relatif avec friction et en offrant conjointement une butée au moyeu 1 dans son débattement radial ou angulaire, comme illustré par les figures 2B et 2C, les rondelles 3, 4 permettent de rattraper les désalignements de façon flexible et d'éviter ainsi l'apparition de contraintes excessives au sein du mécanisme d'embrayage.

Après accommodation des désalignements par le dispositif, le couple en provenance du moteur est transmis grâce à l'engagement de la couronne dentée 12 dans la denture complémentaire 21 du voile annulaire 2.

## Revendications

1. Dispositif d'accommodation (A) du désalignement radial ou angulaire entre les axes respectifs (Y, Z) d'un vilebrequin et d'un arbre d'entrée de boîte de vitesse dans un système de transmission de véhicule automobile comprenant, un voile annulaire (2) destiné à être accouplé en rotation avec le vilebrequin, un moyeu (1) destiné à être, d'une part, accouplé en rotation à l'arbre d'entrée de la boîte de vitesse et, d'autre part, engagé avec une liberté de débattement angulaire et/ou radial dans ledit voile annulaire (2), **caractérisé en ce qu'**il comprend, au moins une rondelle intérieure (3) retenue sur la périphérie du moyeu (1) et au moins une rondelle extérieure (4) montée de façon coaxiale dans un couvercle (5) fixé sur ledit voile (2) en emprisonnant lesdites rondelles (3, 4) de façon jointive de telle sorte que le débattement du moyeu (1) résultant du désalignement entraîne le déplacement radial relatif desdites rondelles (3, 4) et soit maîtrisé par leur couple de frottement mutuel.

2. Dispositif selon la revendication 1, **caractérisé en ce que** la rondelle intérieure (3) présente au moins deux encoches intérieures radiales (30) destinées à coiffer des nervures (10) de profil complémentaire s'étendant axialement sur la périphérie du moyeu (1).

3. Dispositif selon l'une des revendications précédentes, **caractérisé en ce que** ledit moyeu (1) comporte une couronne dentée (12) destinée à se loger dans une denture crénelée (21) ménagée sur le pourtour intérieur d'un orifice (22) ménagé au centre dudit voile annulaire (2).

4. Dispositif selon les revendications 2 et 3, **caractérisé en ce que** lesdites nervures (10) s'étendent entre le bord d'extrémité du moyeu (1) et la couronne dentée (12) assurant l'appui axial sous contraintes de la rondelle intérieure (3) contre ladite couronne dentée (12).

5. Dispositif selon l'une des revendications précédentes, **caractérisé en ce que** le diamètre extérieur de la rondelle intérieure (3) est inférieur au diamètre extérieur de la rondelle extérieure (4).

6. Dispositif selon l'une des revendications précédentes, **caractérisé en ce que** la rondelle extérieure (4) présente au moins deux ergots extérieurs radiaux (40) destinés à pénétrer dans des fentes (50) de profil complémentaire s'étendant axialement sur le pourtour du couvercle (5).

7. Dispositif selon la revendication précédente, **caractérisé en ce que** lesdites fentes (50) du couvercle (5) sont débouchantes sur le pourtour du couvercle.

8. Dispositif selon l'une des revendications précédentes, **caractérisé en ce que** ledit couvercle (5) comporte une collerette périphérique (51) dans laquelle sont ménagés des orifices (51a) pour la réception d'organes de liaison (9) avec le voile annulaire (2).

9. Dispositif selon l'une des revendications précédentes, **caractérisé en ce qu'**il comprend une première série de rondelles intérieures (3) et une seconde série de rondelles extérieures (4) intercalées entre lesdites rondelles intérieures en formant un empilement de rondelles en contact de frottement mutuel.

10. Dispositif selon l'une des revendications précédentes, **caractérisé en ce qu'**il comprend, en outre, au moins accumulateur d'énergie (8) disposé entre le couvercle (5) et lesdites rondelles intérieure (3) et extérieure (4).

11. Dispositif selon l'une des revendications 1 à 9, **caractérisé en ce qu'**il comprend, en outre, au moins accumulateur d'énergie (8) disposé entre le moyeu (1) et lesdites rondelles intérieure (3) et extérieure (4).

12. Disque de friction (6) pour système de transmission de véhicule automobile équipé d'un dispositif d'accommodation des désalignements selon l'une des revendications précédentes et de garnitures de friction (7) portées par la périphérie du voile annulaire (2).

13. Disque de friction (6) selon la revendication précédente, **caractérisé en ce qu'**en transmettant le couple en provenance du vilebrequin vers l'arbre d'entrée de la boîte de vitesse, une partie de ce couple passe par le contact de frottement entre les rondelles intérieures (3) et extérieures (4) tandis qu'une autre partie passe par l'engagement de la couronne dentée (12) du moyeu (1) avec la denture complémentaire (21) de l'orifice central (22) du voile annulaire (2).

14. Système de transmission pour véhicule automobile comprenant, respectivement,
- un double-volant amortisseur (D) et,
- un disque de friction (6) selon la revendication 12 ou 13 dans lequel le couple de frottement entre les rondelles intérieures (3) et extérieures (4) est supérieur au couple de frottement interne dudit double-volant amortisseur (D).

## Patentansprüche

1. Vorrichtung zur Anpassung (A) des radialen oder winkelmäßigen Versatzes zwischen den jeweiligen Achsen (Y, Z) einer Kurbelwelle und einer Antriebswelle eines Schaltgetriebes in einem Getriebesystem eines Kraftfahrzeugs, die eine ringförmige Scheibe (2), die dazu bestimmt ist, in Drehung mit der Kurbelwelle gekoppelt zu werden, und eine Nabe (1) enthält, die dazu bestimmt ist, einerseits in Drehung mit der Antriebswelle des Schaltgetriebes gekoppelt und andererseits mit einer winkelmäßigen und/oder radialen Ausschlagfreiheit in die ringförmige Scheibe (2) eingeführt zu werden, **dadurch gekennzeichnet, dass** sie mindestens eine innere Unterlegscheibe (3), die am Umfang der Nabe (1) gehalten wird, und mindestens eine äußere Unterlegscheibe (4) enthält, die koaxial in einen an der Scheibe (2) befestigten Deckel (5) montiert ist, indem die Unterlegscheiben (3, 4) aneinandergefügt umschlossen werden, so dass der aus dem Versatz resultierende Ausschlag der Nabe (1) die relative radiale Verschiebung der Unterlegscheiben (3, 4) bewirkt und von ihrem gegenseitigen Reibungsmoment beherrscht wird.

2. Vorrichtung nach Anspruch 1, **dadurch gekennzeichnet, dass** die innere Unterlegscheibe (3) mindestens zwei radiale innere Kerben (30) aufweist, die dazu bestimmt sind, sich auf Rippen (10) mit komplementären Profil aufzusetzen, die sich axial am Umfang der Nabe (1) erstrecken.

3. Vorrichtung nach einem der vorhergehenden Ansprüche, **dadurch gekennzeichnet, dass** die Nabe (1) einen Zahnkranz (12) aufweist, der dazu bestimmt ist, in einer gekerbten Zahnung (21) aufgenommen zu werden, die am Innenumfang einer in der Mitte der ringförmigen Scheibe (2) ausgesparten Öffnung (22) angeordnet ist.

4. Vorrichtung nach den Ansprüchen 2 und 3, **dadurch gekennzeichnet, dass** die Rippen (10) sich zwischen dem Endrand der Nabe (1) und dem Zahnkranz (12) erstrecken und die axiale Auflage der inneren Unterlegscheibe (3) unter Last gegen den Zahnkranz (12) gewährleisten.

5. Vorrichtung nach einem der vorhergehenden Ansprüche, **dadurch gekennzeichnet, dass** der Außendurchmesser der inneren Unterlegscheibe (3) kleiner ist als der Außendurchmesser der äußeren Unterlegscheibe (4).

6. Vorrichtung nach einem der vorhergehenden Ansprüche, **dadurch gekennzeichnet, dass** die äußere Unterlegscheibe (4) mindestens zwei radiale äußere Vorsprünge (40) aufweist, die dazu bestimmt sind, in Schlitze (50) mit komplementärem Profil einzudringen, die sich axial über den Umfang des Deckels (5) erstrecken.

7. Vorrichtung nach dem vorhergehenden Anspruch, **dadurch gekennzeichnet, dass** die Schlitze (50) des Deckels (5) am Umfang des Deckels münden.

8. Vorrichtung nach einem der vorhergehenden Ansprüche, **dadurch gekennzeichnet, dass** der Deckel (5) einen Umfangskragen (51) aufweist, in dem Öffnungen (51a) zur Aufnahme von Verbindungsorganen (9) mit der ringförmigen Scheibe (2) ausgespart sind.

9. Vorrichtung nach einem der vorhergehenden Ansprüche, **dadurch gekennzeichnet, dass** sie eine erste Reihe von inneren Unterlegscheiben (3) und eine zweite Reihe von äußeren Unterlegscheiben (4) enthält, die zwischen die inneren Unterlegscheiben eingefügt sind, indem sie eine Stapelung von Unterlegscheiben in gegenseitigem Reibungskontakt bilden.

10. Vorrichtung nach einem der vorhergehenden Ansprüche, **dadurch gekennzeichnet, dass** sie außerdem mindestens einen Energiespeicher (8) enthält, der zwischen dem Deckel (5) und den inneren (3) und äußeren (4) Unterlegscheiben angeordnet ist.

11. Vorrichtung nach einem der Ansprüche 1 bis 9, **dadurch gekennzeichnet, dass** sie außerdem mindestens einen Energiespeicher (8) enthält, der zwischen der Nabe (1) und den inneren (3) und äußeren (4) Unterlegscheiben angeordnet ist.

12. Reibscheibe (6) für ein Antriebssystem eines Kraftfahrzeugs, die mit einer Vorrichtung zur Anpassung des Versatzes nach einem der vorhergehenden Ansprüche und mit Reibbelägen (7) ausgestattet ist, die vom Umfang der ringförmigen Scheibe (2) getragen werden.

13. Reibscheibe (6) nach dem vorhergehenden Anspruch, **dadurch gekennzeichnet, dass** bei Übertragung des von der Kurbelwelle kommenden Moments zur Antriebswelle des Schaltgetriebes ein Teil dieses Moments über den Reibungskontakt zwischen den inneren (3) und äußeren (4) Unterlegscheiben geht, während ein anderer Teil über den Eingriff des Zahnkranzes (12) der Nabe (1) mit der komplementären Zahnung (21) der zentralen Öffnung (22) der ringförmigen Scheibe (2) geht.

14. Antriebssystem für ein Kraftfahrzeug, das je enthält
- ein Zweimassenschwungrad (D) und
- eine Reibscheibe (6) nach Anspruch 12 oder 13, bei der das Reibungsmoment zwischen den inneren (3) und äußeren (4) Unterlegscheiben größer ist als das innere Reibungsmoment des Zweimassenschwungrads (D).

## Claims

1. Device (A) for accommodating the radial or angular misalignment between the respective axes (Y, Z) of a crankshaft and an input shaft of a gearbox in a motor vehicle transmission system, comprising an annular web (2) designed to be coupled in rotation with the crankshaft, a hub (1) designed to be, on one hand, coupled in rotation with the gearbox input shaft and, on the other hand, engaged with an angular and/or radial play in said annular web (2), **characterized in that** it comprises at least one inner washer (3) retained on the periphery of the hub (1) and at least one outer washer (4) mounted coaxially in a cover (5) attached to said web (2) enclosing said washers (3, 4) conjoinedly such that the play of the hub (1) resulting from the misalignment causes said washers (3, 4) to move radially relative to one another, and such that this play is controlled by their mutual friction torque.

2. Device according to Claim 1, **characterized in that** the inner washer (3) has at least two inner radial notches (30) designed to fit over axially-extending ribs (10) of matching profile on the periphery of the hub (1) .

3. Device according to either of the preceding claims, **characterized in that** said hub (1) comprises a toothed wheel (12) that is designed to fit into a crenelated toothing (21) created on the inner perimeter of an opening (22) created at the centre of said annular web (2).

4. Device according to Claims 2 and 3, **characterized in that** said ribs (10) extend between the end edge of the hub (1) and the toothed wheel (12), ensuring axial pressure under loading of the inner washer (3) against said toothed wheel (12).

5. Device according to one of the preceding claims, **characterized in that** the outer diameter of the inner washer (3) is smaller than the outer diameter of the outer washer (4).

6. Device according to one of the preceding claims, **characterized in that** the outer washer (4) has at least two outer radial lugs (40) that are designed to fit into axially-extending slots (50) of matching profile on the periphery of the cover (5).

7. Device according to the preceding claim, **characterized in that** said slots (50) of the cover (5) open onto the periphery of the cover.

8. Device according to one of the preceding claims, **characterized in that** said cover (5) comprises a peripheral collar (51) in which are created orifices (51a) for receiving connecting members (9) for connecting to the annular web (2).

9. Device according to one of the preceding claims, **characterized in that** it comprises a first set of inner washers (3) and a second set of outer washers (4) interposed between said inner washers, forming a stack of washers in mutual frictional contact.

10. Device according to one of the preceding claims, **characterized in that** it further comprises at least one energy accumulator (8) arranged between the cover (5) and said inner (3) and outer washers (4).

11. Device according to one of Claims 1 to 9, **characterized in that** it further comprises at least one energy accumulator (8) arranged between the hub (1) and said inner (3) and outer washers (4).

12. Friction disc (6) for a motor vehicle transmission system equipped with a misalignment accommodation device according to one of the preceding claims and friction pads (7) borne by the periphery of the annular web (2).

13. Friction disc (6) according to the preceding claim, **characterized in that**, in transmitting the torque from the crankshaft to the gearbox input shaft, one part of this torque passes via the friction contact between the inner (3) and outer (4) washers, while another part passes via the engagement between the toothed wheel (12) of the hub (1) and the matching toothing (21) of the central opening (22) of the annular web (2).

14. Motor vehicle transmission system comprising, respectively,
- a double-mass flywheel (D) and
- a friction disc (6) according to Claim 12 or 13 in which the friction torque between the inner (3) and outer (4) washers is greater than the internal friction torque of said double-mass flywheel (D).
